# EUROPÄISCHE PATENTANMELDUNG

(11) **EP 0 787 628 A2**
(43) Veröffentlichungstag der Anmeldung: **06.08.1997**
(21) Anmeldenummer: 96114595.0
(22) Anmeldetag: 12.09.1996
(51) Int. Cl.: B60R 21/20

(54) **Airbagmodul-Profil**

(30) Priorität: 23.09.1995 DE 19535430
(71) Anmelder: VAW Aluminium AG, D-53117 Bonn (DE)
(72) Erfinder: Bugdaci, Arif, 53347 Alfter (DE); Brodam, Michael, 53757 Sankt Augustin (DE)
(74) Vertreter: Müller-Wolff, Thomas, Dipl.-Ing.

(57) **Zusammenfassung**

Die Erfindung betrifft ein Airbagprofil für die Verwendung in einem Airbag-System, bestehend aus einem Gehäuse zur Aufnahme eines Gasgenerators sowie Anschlußteilen für einen Luftsack, wie z.B. Befestigungsschenkeln und aus Profilschenkeln (3). Zur Reduzierung des Einbauvolumens bei gleichzeitiger Verringerung des Gewichts und der Herstellungskosten wird das Airbag-Gehäuse druckdicht ausgebildet, wobei das Druckgehäuse (1) als ein im wesentlicher rohrförmiger Körper mit zwei an den jeweiligen Enden angeordneten Deckeln (4, 5) verschlossen ist und an der zum Luftsack hin gerichteten Profilseite mehrere Druckauslaßöffnungen (2) aufweist.

## Beschreibung

Die Erfindung betrifft ein neues Airbagprofil für die Verwendung in einem Airbag-System, insbesondere bei engen Einbauverhältnissen in einem PKW, bestehend aus einem Gehäuse zur Aufnahme eines Gasgenerators sowie Anschlußteilen für einen luftsack, wie z.B. Besfestigungsschenkeln und aus Profilschenkeln 3.

Das sogenannte "Airbag-System" besteht aus mehreren Grundkomponenten, nämlich dem Luftsack, einem Gasgenerator und einem Auslösegerät bzw. Zünder.

Folgende Anforderungen werden an ein Airbag-System gestellt:
1. geringes Gewicht;
2. hohe Leistungsfähigkeit;
3. Funktionssicherheit;
4. niedrige Kosten;
5. geringer Platzbedarf.

Seit einiger Zeit werden neue Anwendungsbereiche für den Airbag diskutiert und zwar:
- der Einsatz im Seitenaufprallbereich
- Anwendungen im Nutzfahrzeug- und Zweiradbereich
- verstärkter Kopfschutz

Die neuen Anwendungsbereiche lassen verstärkt eine Forderung nach geringem Gewicht und niedrigem Platzbedarf aufkommen. Gleichzeitig sind jedoch die vorher genannten Anforderungen wie hohe Funktionssicherheit und niedrige Kosten weiter verschärft worden.

Für die Gasgeneratoren sind verschiedene Stoffsysteme im Einsatz:
1. Feststoffgasgeneratoren, bei denen stickstoffhaltige Verbindungen mit geeigneten Sauerstoffträgern in Kontakt gebracht werden. Gegebenenfalls sind Katalysatoren an Kühlmittel zusätzlich erforderlich.
2. Flüssiggasgeneratoren wie beispielsweise Hydrazin/Hydrazinnitratgemische mit Hydroxilammoniumnitrat.
3. Hybridgasgeneratoren, bei denen vorgespannte Gase in Druckbehältern gehalten und nach Öffnen einer Membran in den Luftsack strömen. Ein in zwei Stufen funktionierender pyrotechnischer Zündsatz öffnet die Membran und heizt das Arbeitsgas auf. Dadurch wird die Abkühlung des expandierenden Gases kompensiert.
4. Gasgeneratoren unter Verwendung von Flüssig- oder Feststoffgasen. Hier besteht die Kohlenmonoxyd-Problematik, da die Reaktionsgase erhebliche CO-Mengen enthalten.

Vor diesem Hintergrund bestand die Aufgabe, ein Airbag-Profil für enge Einbauverhältnisse zu entwickeln, das mit allen genannten Systemen kompatibel ist und bei hoher Funktionssicherheit ein geringes Gewicht und geringe Kosten aufweist.

Diese Aufgabe wird erfindungsgemäß durch die in den Patentansprüchen angegebenen Merkmale gelöst. Es hat sich gezeigt, daß auf ein separates Gehäuse für ein Gasgenerator verzichtet werden kann, wenn die Teile des Druckbehälters erfindungsgemäß aufeinander abgestimmt werden. Dabei ist eine Anpassung der Wanddicke des Airbagprofils je nach Typ (Ziffer 1-4) des Gasgenerators erforderlich.

Im folgenden ist die Erfindung anhand eines Ausführungsbeispieles näher erläutert. Es zeigen
- Fig. 1:: perspektivische Ansicht der Komponenten des neuen Airbag-Profils
- Fig. 2:: Prinzipbild der Verbindung zwischen Druckgehäuse und Deckel
- Fig. 3:: Seitenansicht der beiden Verschlußdeckel für das Druckgehäuse
- Fig. 4-7:: verschiedene Formen des Airbag-Anschlußprofiles

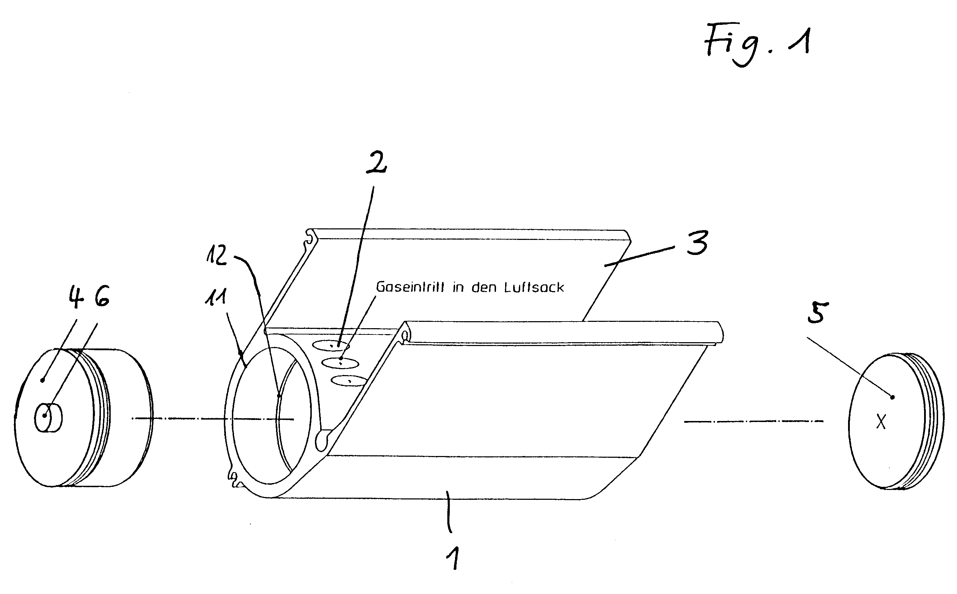

In Fig. 1 ist das Druckgehäuse 1 mit dem Druckauslaßöffnungen 2 und den Profilschenkeln 3 für die Deckelbefestigung in perspektivischer Darstellung gezeigt. Man erkennt ferner die seitlichen Verschlußdeckel 4 und 5 für das Druckgehäuse 1. Mit 6 ist der Zündmechanismus im Deckel 4 angedeutet.

Zur Befestigung des Deckels 4 im Druckgehäuse 1 ist eine Reibschweißung an den Stellen I und II vorgesehen. Hierfür ist am Ende des Deckels 4 zunächst eine schräge Anlauffläche 7 mit anschließender erhöhter Horizontalfläche 8 im Deckel 4 eingearbeitet. Beim Reibschweißvorgang wird daher das Material vom vom Druckgehäuse 1 an der Anlauffläche 7 in den Schmelzzustand versetzt, aufgeweitet und über die Horizontalfläche 8 in eine Nut 9 zusammengeführt, die gleichzeitig als ein Wulstbegrenzer zusammen mit dem Anschlag 10 bewirkt, daß eine formschlüssige Klemmverbindung zwischen Druckgehäuse 1 und Deckel 4 entsteht.

In ähnlicher Weise erfolgt die Reibschweißung in Position II, wobei jeweils eine scharfkantiger Absatz 11, 12 im Druckgehäuse 1 angeformt ist. Auf die Nut 9' bei II kann auch verzichtet werden, je nach Typ des Gasgenerators sind nämlich verschiedene Klemmkräfte erforderlich.

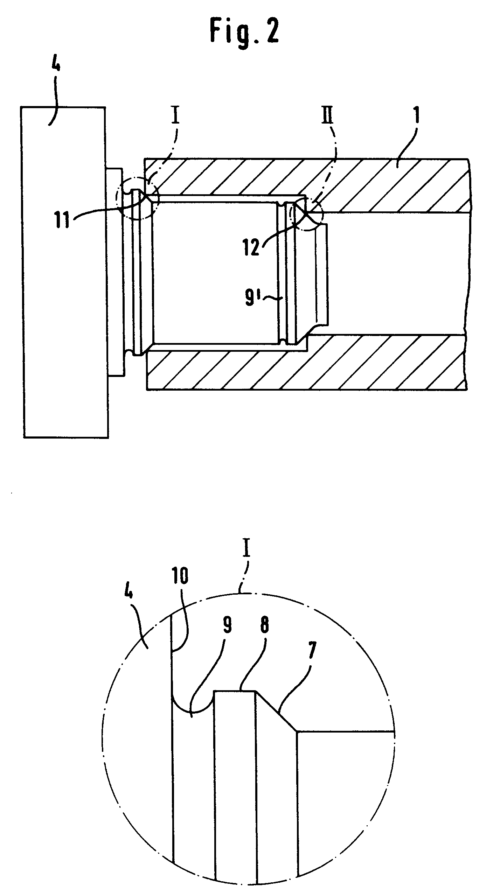

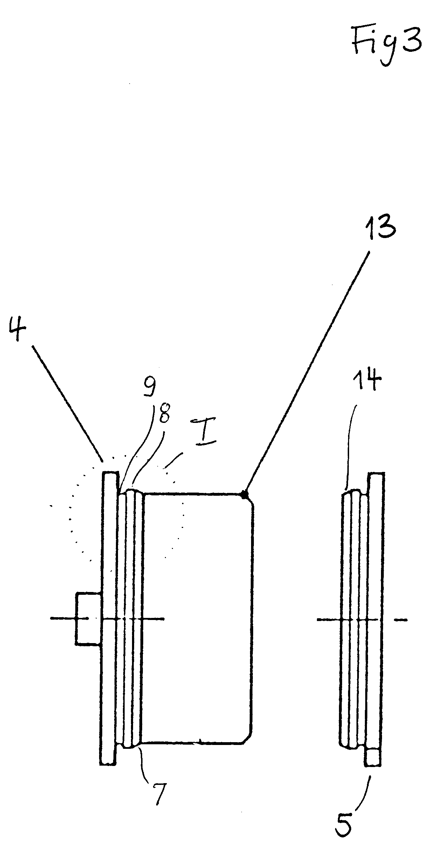

Fig. 3 zeigt die Verhältnisse an den Deckeln 4 und 5 in vergrößerter Darstellung. Beim Deckel 4 erkennt man die vordere Anlauffläche 13, die der Anlauffläche 14 am Deckel 5 entspricht. Alle übrigen Funktionen sind bereits an Fig. 2 erläutert worden, wobei hier jedoch auf die Nut 9' verzichtet wurde.

Die Figuren 4 - 7 zeigen verschiedene Ausführungsformen des erfindungsgemäßen Airbag-Profils. In Figur 4 sind die Profilschenkel 15, 16 gleich lang ausgebildet und weisen an der äußeren Begrenzungskante zwei Befestigungsösen 17, 18 für eine Befestigung des Airbag-Deckels auf. Der Luftsack (nicht dargestellt) kann am unteren Ende der Profilschenkel 15, 16 in den Nuten 19, 20 verankert werden. Hier ist also die Funktion der Profilschenkel und der Befestigungsschenkel für eine schmale, aber tiefe Einbauöffnung ausgelegt.

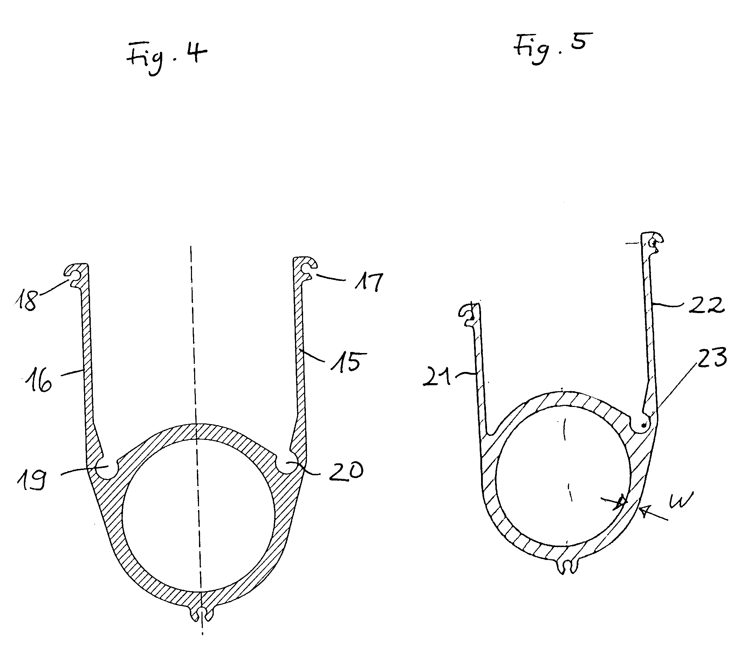

Analog zu Fig. 4 zeigt Fig. 5 eine andere Ausführungsform der Erfindung mit verschieden langen Airbag-Schenkeln 21, 22, wobei nur an dem einen Profilschenkel 22 in der Übergangsstelle in das Druckgehäuse 1 eine Nut 23 zur Aufnahme und Befestigung des Luftsackes angeordnet ist. Hier ist die Gehäusewandung W für die Aufnahme eines Hybridgasgenerators besonders dick ausgebildet. Für andere Generatortypen sind auch dünnere Wandstärken einsetzbar.

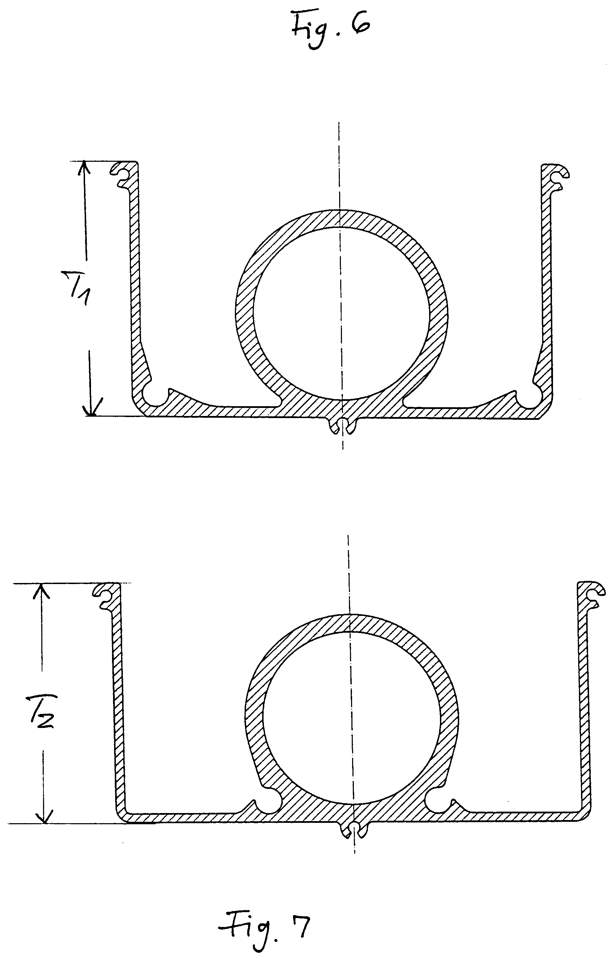

Weitere Varianten zur Befestigung des Luftsackes sind in den Fig. 6 und 7 dargestellt. Die Vorteile dieser jeweiligen Anordnung ist für den Fachmann aus der Darstellung ersichtlich. Es handelt sich um Profilausbildungen für relativ breite Einbauöffnungen, die jedoch nur eine geringe Einbautiefe T zulassen. Die Einbautiefe T₁ liegt um ca. 15 % unter der herkömmlicher Profilsysteme, die Einbautiefe T₂ sogar um 20 % darunter.

Weitere Vorteile der erfindungsgemäßen Profilgestaltung liegen in einer 10-25 % Kostenreduzierung, bedingt durch die geringere Anzahl der verwendeten Bauteile. Ferner konnte eine Gewichtsersparnis von 10-20 % je nach Gasgeneratortyp erreicht werden, bei sonst gleichen Systemgrößen wie z.B. Airbag-Volumen und Sicherheitsfunktion.

## Patentansprüche

1. Airbagprofil für die Verwendung in einem Airbag-System, bestehend aus einem Gehäuse zur Aufnahme eines Gasgenerators sowie Anschlußteilen für einen Luftsack, wie z.B. Befestigungsschenkeln und aus Profilschenkeln (3),
dadurch gekennzeichnet,
daß das Airbag-Gehäuse druckdicht ausgebildet ist, wobei das Druckgehäuse (1) als ein im wesentlicher rohrförmiger Körper mit zwei an den jeweiligen Enden angeordneten Deckeln (4, 5) verschlossen ist und an der zum Luftsack hin gerichteten Profilseite mehrere Druckauslaßöffnungen (2) aufweist.

2. Airbagprofil nach Anspruch 1,
dadurch gekennzeichnet,
daß die seitlichen Verschlußdeckel (4, 5) durch eine Reibschweißung mit dem Gehäuse fest verbunden sind.

3. Airbagprofil nach einem der vorhergehenden Ansprüche,
dadurch gekennzeichnet,
daß die Deckel (4, 5) je eine erhöhte Horizontalfläche (8) aufweisen, die gegenüber dem Innendurchmesser des Airbagprofils ein Übermaß besitzen und daß vor der Horizontalfläche (8) eine schräg angeordnete Anlauffläche (7) am Deckel (4 bzw. 5) angeordnet ist, über die die Innenkante des Airbagprofils beim Reibschweißen geschoben wird.

4. Airbagprofil nach einem der vorhergehenden Ansprüche,
dadurch gekennzeichnet,
daß hinter der Horizontalfläche (8) eine tieferliegende Nut (9) mit halbkreisförmigem Querschnitt angeordnet ist, die als Wulstbegrenzer zusammen mit einem Anschlag (10) bei der Ausbildung der Reibschweißnaht wirkt.

5. Airbagprofil nach einem der vorhergehenden Ansprüche,
dadurch gekennzeichnet,
daß das Airbagprofil an einer Seite mit einem, einen Zündmechanismus aufweisenden Deckel (4) und an der anderen Seite mit einem einfachen Verschlußdeckel (5) ausgestattet ist.

6. Airbagprofil nach einem der vorhergehenden Ansprüche,
dadurch gekennzeichnet,
daß der Verschlußdeckel (4) an seiner vorderen, in das Innere des Airbagprofils hineinragenden Abschlußkante eine vordere Anlauffläche (13) aufweist, die beim Reibschweißvorgang gegen einen scharfkantigen Absatz (12) im Druckgehäuse (1) anpreßbar ist.
